(19) Europäisches Patentamt
European Patent Office
Office européen des brevets

(11) **EP 2 878 930 B1**

(12) **EUROPÄISCHE PATENTSCHRIFT**

(45) Veröffentlichungstag und Bekanntmachung des Hinweises auf die Patenterteilung:
**31.08.2016  Patentblatt 2016/35**

(51) Int Cl.:
*G01B 11/14* *(2006.01)*      *G01D 5/347* *(2006.01)*
*G01D 5/38* *(2006.01)*

(21) Anmeldenummer: **14192766.5**

(22) Anmeldetag: **12.11.2014**

(54) **Positionsmesseinrichtung**

Position measuring device

Dispositif de mesure de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2013  DE 102013224405**
**07.08.2014  DE 102014215633**

(43) Veröffentlichungstag der Anmeldung:
**03.06.2015  Patentblatt 2015/23**

(73) Patentinhaber: **Dr. Johannes Heidenhain GmbH 83301 Traunreut (DE)**

(72) Erfinder:
• **Schoser, Jürgen**
**83301 Traunreut (DE)**
• **Holzapfel, Wolfgang**
**83119 Obing (DE)**
• **Hermann, Michael**
**83342 Tacherting (DE)**
• **Höfer, Volker**
**83349 Palling (DE)**

(56) Entgegenhaltungen:
**EP-A1- 2 520 906      EP-A2- 0 209 676**
**EP-A2- 0 388 390      EP-A2- 1 691 172**
**EP-B1- 1 407 231**

**Beschreibung**

GEBIET DER TECHNIK

Die vorliegende Erfindung betrifft eine Positionsmesseinrichtung nach dem Oberbegriff von Anspruch 1.

STAND DER TECHNIK

Derartige Positionsmesseinrichtungen werden insbesondere in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie, beispielsweise in Wafersteppern eingesetzt. Dabei ist die Positionsmesseinrichtung eine Winkel- oder Längenmesseinrichtung, bei der der Maßstab an der Antriebseinheit (rotatorischer Motor oder Linearmotor) direkt angebaut wird, oder der Maßstab an einem durch die Antriebseinheit angetriebenen Bauteil angebaut wird. Stationär gegenüber dem bewegten Maßstab ist die Abtasteinheit der Positionsmesseinrichtung an einem anderen Maschinenteil angeordnet.

Der Maßstab einer solchen Positionsmesseinrichtung ist beispielsweise aus der DE 101 32 521 A1 bekannt und weist eine periodische Messteilung zur Erzeugung von periodischen Messsignalen in Form von Inkrementalsignalen sowie eine Referenzmarkierung zur Erzeugung eines Referenzsignals auf. Über das Referenzsignal kann für die Position der Referenzmarkierung ein Absolutbezug der inkrementalen Positionsmessung hergestellt werden, indem ein Zähler auf einen vorgegebenen Zählerstand gesetzt wird.

Zu Beginn einer Positionsmessung sowie zur Korrektur und Kontrolle des Zählerstands ist es oft erforderlich, von einer beliebigen Position ausgehend die Referenzmarkierung anzufahren. Hierzu sind Bereichsmarkierungen auf dem Maßstab aufgebracht, durch die unterschieden werden kann, wo sich die Abtasteinheit relativ zur Referenzmarkierung befindet, d.h. ob sich die Abtasteinheit auf der einen oder auf der anderen Seite der Referenzmarkierung befindet. Diese Bereichsmarkierung ist in der bekannten Vorrichtung aus der DE 101 32 521 A1 auf einer Seite der Referenzmarkierung als reflektierender oder transparenter Streifen ausgebildet, auf der anderen Seite der Referenzmarkierung ist die Bereichsmarkierung als Beugungsgitter ausgeführt. Zur Abtastung beider Bereichsmarkierungen sind mehrere Fotoempfänger in der Abtasteinheit angeordnet. Einige Fotoempfänger werden hierbei nur dann vom Abtaststrahlenbündel beaufschlagt, wenn sich die Abtasteinheit auf der einen Seite der Referenzmarkierung befindet. Die restlichen Fotoempfänger werden hingegen nur dann vom Abtaststrahlenbündel beaufschlagt, wenn sich die Abtasteinheit auf der anderen Seite der Referenzmarkierung befindet. Aus den Abtastsignalen der verschiedenen Fotoempfänger wird ein Bereichssignal erzeugt, aus dessen Signalpegel darauf geschlossen werden kann, auf welcher Seite der Referenzmarkierung sich die Abtasteinheit bei der Positionsmessung gerade befindet.

Das aus der DE 101 32 521 A1 bekannte Vorgehen zur Erzeugung von Bereichssignalen eignet sich für Positionsmesseinrichtungen mit kollimierter Beleuchtung des Maßstabs, für eine Positionsmesseinrichtung mit divergenter Beleuchtung des Maßstabs ist dieses Konzept jedoch nicht verwendbar.

Aus der EP 2 520 906 A1 ist eine optische Positionsmesseinrichtung mit divergenter Maßstabs-Beleuchtung bekannt, die insbesondere hinsichtlich nicht-ideal zueinander ausgerichteter Komponenten im Abtaststrahlengang optimiert ist. Hierzu ist eine bestimmte geometrische Ausgestaltung der Detektoranordnung und der Detektorelemente sowie das Anordnen von periodischen Blendenstrukturen vor den lichtempfindlichen Flächen der Detektorelemente vorgesehen. Die Druckschrift enthält keine Hinweise dahingehend, wie in einer derartigen Positionsmesseinrichtung in geeigneter Art und Weise ein Bereichssignal der eingangs diskutierten Art erzeugt werden könnte.

ZUSAMMENFASSUNG DER ERFINDUNG

Der vorliegenden Erfindung liegt die Aufgabe zugrunde, bei einer Positionsmesseinrichtung mit divergenter Maßstabs-Beleuchtung eine sichere Erzeugung eines Bereichssignales zu ermöglichen, das die Relativposition einer Abtasteinheit in Bezug auf eine Referenzmarkierung charakterisiert.

Diese Aufgabe wird erfindungsgemäß durch eine Positionsmesseinrichtung mit den Merkmalen des Anspruchs gelöst.

Vorteilhafte Ausführungen der erfindungsgemäßen Positionsmesseinrichtung ergeben sich aus den Maßnahmen, die in den abhängigen Ansprüchen aufgeführt sind.

Die erfindungsgemäße Positionsmesseinrichtung umfasst einen Maßstab und eine relativ dazu in Messrichtung bewegliche Abtasteinheit. Der Maßstab weist eine Messteilung auf, wobei durch eine optische Abtastung der Messteilung periodische Messsignale sind erzeugbar sind. Ferner weist der Maßstab zumindest eine Referenzmarkierung auf, wobei durch eine optische Abtastung der Referenzmarkierung ein Referenzsignal erzeugbar ist. Desweiteren weist der Maßstab optisch abtastbare Bereichsmarkierungen auf, wobei durch eine optische Abtastung der Bereichsmarkierungen mit einem Abtaststrahlenbündel und dessen Detektion über einen Bereichssignal-Detektor ein Bereichssignal erzeugbar ist. Über das Bereichssignal ist unterscheidbar, ob sich die Abtasteinheit auf der ersten oder der zweiten Seite der Referenzmarkierung befindet. Die Bereichsmarkierungen auf der ersten und zweiten Seite der Referenzmarkierung üben unterschiedliche Ablenkwirkungen auf das darauf auftreffende Abtaststrahlenbündel aus. Zwischen dem Maßstab und dem Bereichssignal-Detektor ist ein periodisches Blendengitter angeordnet, welches derart

**Fortsetzung: Ursprüngliche Seite 4**

ausgebildet und angeordnet ist, dass bei der optischen Abtastung der Bereichsmarkierungen in der Detektionsebene des Bereichssignal-Detektors ein Streifenmuster resultiert, aus dem abhängig von der Position der Abtasteinheit relativ zur Referenzmarkierung mindestens zwei unterscheidbare Abtastsignale erzeugbar sind.

Dabei kann die Periodizität des Blendengitters gemäß

$$P_{BM} = \lambda \,/\, (\sin\,(\mathrm{atan}(P_{SG}\,(u + v))))$$

gewählt werden, mit:

$P_{BM}$ := Periodizität des Reflexions-Beugungsgitters der Bereichsmarkierung
u := zurückgelegte Weglänge der Abtaststrahlenbündel zwischen dem Sendegitter über den Maßstab bis zum Blendengitter
v := zurückgelegte Weglänge der Abtaststrahlenbündel zwischen dem Blendengitter und der Detektionsebene des Bereichssignal-Detektors
A := Wellenlänge der verwendeten Lichtquelle
$P_{SG}$ := Periodizität des Sendegitters

Mit Vorteil ist die Bereichsmarkierung auf der ersten Seite der Referenzmarkierung reflektierend ausgebildet und die Bereichsmarkierung auf der zweiten Seite der Referenzmarkierung als Reflexions-Beugungsgitter ausgebildet.

Es ist hierbei möglich, dass das Reflexions-Beugungsgitter der Bereichsmarkierung eine unterschiedliche Periodizität besitzt als die Messteilung.

In einer möglichen Ausführungsform ist die Periodizität des Reflexions-Beugungsgitters gemäß

$$P_{BM} = 2 \cdot v \cdot \lambda \,/\, P_{BD}$$

gewählt, mit

$P_{BM}$ := Periodizität des Reflexions-Beugungsgitters der Bereichsmarkierung
v : := zurückgelegte Weglänge der Abtaststrahlenbündel zwischen dem Blendengitter und der Detektionsebene des Bereichssignal-Detektors
A := Wellenlänge der verwendeten Lichtquelle
$P_{BD}$ := Periodizität des Bereichssignal-Detektors

Desweiteren kann vorgesehen werden, dass die Bereichsmarkierungen in einer Bereichsmarkierungs-Spur und die Referenzmarkierung in einer Referenzmarkierungs-Spur auf dem Maßstab angeordnet sind, wobei sich die Bereichsmarkierungs-Spur und die Referenzmarkierungs-Spur parallel entlang der Messrichtung erstrecken.

Es ist ferner möglich, dass der Maßstab mehrere Limitbereiche aufweist, wobei die Limitbereiche durch partielles Verändern der optischen Wirkung der Bereichsmarkierungen oder der Referenzmarkierungs-Spur ausgebildet sind.

Dabei können die Limitbereiche mindestens in Teilbereichen der Bereichsmarkierungs-Spur oder der Referenzmarkierungs-Spur ausgebildet sein, wobei in den Limitbereichen senkrecht zur Messteilung orientierte Transmissionsgitter oder Reflexionsgitter angeordnet sind.

In einer möglichen Ausführungsform beleuchtet eine divergent abstrahlende Lichtquelle ohne zwischengeschaltete Optikelemente ein periodisches Sendegitter, dem in Strahlausbreitungsrichtung der Maßstab mit der Messteilung, mit der mindestens einen Referenzmarkierung und den Bereichsmarkierungen sowie das Blendengitter und eine Detektoranordnung mit dem Bereichssignal-Detektor, einem Inkrementalsignal-Detektor und einem Referenzsignal-Detektor nachgeordnet ist.

Mit Vorteil besteht der Bereichssignal-Detektor aus zwei Gruppen von periodisch alternierend angeordneten Detektorelementen, wobei die Detektorelemente einer Gruppe jeweils miteinander verschaltet sind.

Es kann vorgesehen werden, dass das Beugungsgitter als Phasengitter mit resultierenden +/- 1. Beugungsordnungen und unterdrückter 0. Beugungsordnung ausgebildet ist, so dass beim Übergang des Abtaststrahlenbündels zwischen den Bereichsmarkierungen eine örtliche Verschiebung des Streifenmusters in der Detektionsebene resultiert.

Hierbei ist es möglich, dass die Periodizitäten des Blendengitters und des Bereichssignal-Detektors derart gewählt und das Blendengitter sowie der Bereichssignal-Detektor derart angeordnet sind,

- dass im Fall der Position der Abtasteinheit auf der ersten Seite der Referenzmarkierung die erste Gruppe von Detektorelementen ein maximales Abtastsignal und die zweite Gruppe von Detektorelementen ein minimales Abtastsignal registriert und
- dass im Fall der Position der Abtasteinheit auf der zweiten Seite der Referenzmarkierung die erste Gruppe von Detektorelementen ein minimales Abtastsignal und die zweite Gruppe von Detektorelementen ein maximales Abtastsignal registriert.

Dabei kann vorgesehen werden, dass zur Bildung des Bereichssignals die Abtastsignale der ersten und zweiten Gruppe von Detektorelementen einem Differenzbildungselement zuführbar sind und aus dem resultierenden Differenzsignal über ein nachgeordnetes Komparatorelement das Bereichssignal erzeugbar ist.

Desweiteren ist auch möglich, dass das Beugungsgitter als Amplituden- oder Phasengitter mit resultierenden 0. und +/- 1. Beugungsordnungen ausgebildet ist, so dass bei der Abtastung der unterschiedlichen Bereichsmarkierungen Streifenmuster mit unterschiedlichen gemittelten Intensitäten in der Detektionsebene resultieren.

Hierbei kann vorgesehen sein, dass zur Bildung des Bereichssignals die Abtastsignale der ersten und zweiten Gruppe von Detektorelementen unterschiedlich verstärkt einem Differenzbildungselement zuführbar sind und aus dem resultierenden Differenzsignal über ein nachgeordnetes Komparatorelement das Bereichssignal erzeugbar ist.

Über die erfindungsgemäßen Maßnahmen kann nunmehr auch in einer Positionsmesseinrichtung mit divergenter Beleuchtung des Maßstabs ein Bereichssignal sicher erzeugt werden, das die Relativposition der Abtasteinheit in Bezug auf eine Referenzmarkierung charakterisiert.

Die in der Detektionsebene resultierenden periodischen Streifenmuster sind statisch und besitzen auch im Fall einer Bewegung der Abtasteinheit relativ zum Maßstab keine oszillierenden Signalanteile, die von der Erzeugung der periodischen Messsignale stammen. Dadurch ist eine schaltungstechnisch einfache Weiterverarbeitung der Abtastsignale des Bereichssignal-Detektors zur Erzeugung eines Bereichssignals möglich.

Zur Herstellung des Maßstabs ist in der erfindungsgemäßen Lösung kein separater Prozessierungsschritt für die Bereichsmarkierungen erforderlich. Die als Beugungsgitter ausgebildete Bereichsmarkierung kann in einem gemeinsamen Prozessierungsschritt zusammen mit den erforderlichen Strukturen für die Messteilung und die Referenzmarkierung erzeugt werden.

Weitere Einzelheiten und Vorteile der vorliegenden Erfindung seien anhand der nachfolgenden Beschreibung eines Ausführungsbeispiels der erfindungsgemäßen Vorrichtung in Verbindung mit den Figuren erläutert.

## KURZE BESCHREIBUNG DER ZEICHNUNGEN

Es zeigt

Figur 1    eine schematische Darstellung eines Ausführungsbeispiels eines ersten Ausführungsbeispiels der erfindungsgemäßen Positionsmesseinrichtung mit den verschiedenen Abtaststrahlengängen;

Figur 2    eine weitere Schnittansicht der Positionsmesseinrichtung aus Figur 1;

Figur 3    eine Draufsicht auf den Maßstab der Positionsmesseinrichtung aus Figur 1;

Figur 4    eine Draufsicht auf die Abtastplatte der Positionsmesseinrichtung aus Figur 1;

Figur 5    eine Draufsicht auf die Detektionsebene der Positionsmesseinrichtung aus Figur 1;

Figur 6    die in verschiedenen Stellungen in der Detektionsebene resultierenden Intensitätsmuster der Positionsmesseinrichtung aus Figur 1;

Figur 7    den Verlauf der aus den Detektorelementen des Bereichssignal-Detektors erzeugten Abtastsignale im Bereich der Referenzmarkierung der Positionsmesseinrichtung aus Figur 1;

Figur 8a    eine Schaltungsanordnung zur Erzeugung eines Bereichssignals aus der Verarbeitung der Abtastsignale des Bereichssignal-Detektors im Bereich der Referenzmarkierung in der Positionsmesseinrichtung aus Figur 1;

Figur 8b      verschiedene Signale im Zusammenhang mit der Signalverarbeitung in der Schaltungsanordnung der Figur 8a;

Figur 9a      eine Schaltungsanordnung zur Erzeugung eines Limitsignals aus der Verarbeitung der Abtastsignale des Bereichssignal-Detektors im Bereich der Referenzmarkierung in der Positionsmesseinrichtung aus Figur 1;

Figur 9b      verschiedene Signale im Zusammenhang mit der Signalverarbeitung in der Schaltungsanordnung der Figur 9a;

Figur 10      die in verschiedenen Stellungen in der Detektionsebene des Bereichssignal-Detektors resultierenden Intensitätsmuster in einem zweiten Ausführungsbeispiel der erfindungsgemäßen Positionsmesseinrichtung;

Figur 11      verschiedene Signale im Zusammenhang mit der Signalverarbeitung des zweiten Ausführungsbeispiels.

## BESCHREIBUNG DER AUSFÜHRUNGSFORMEN

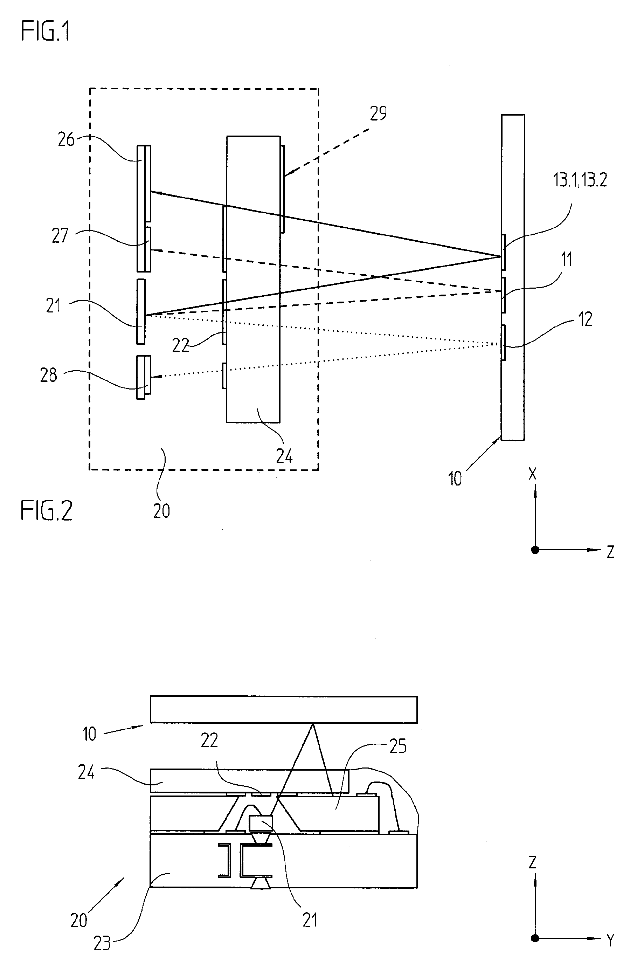

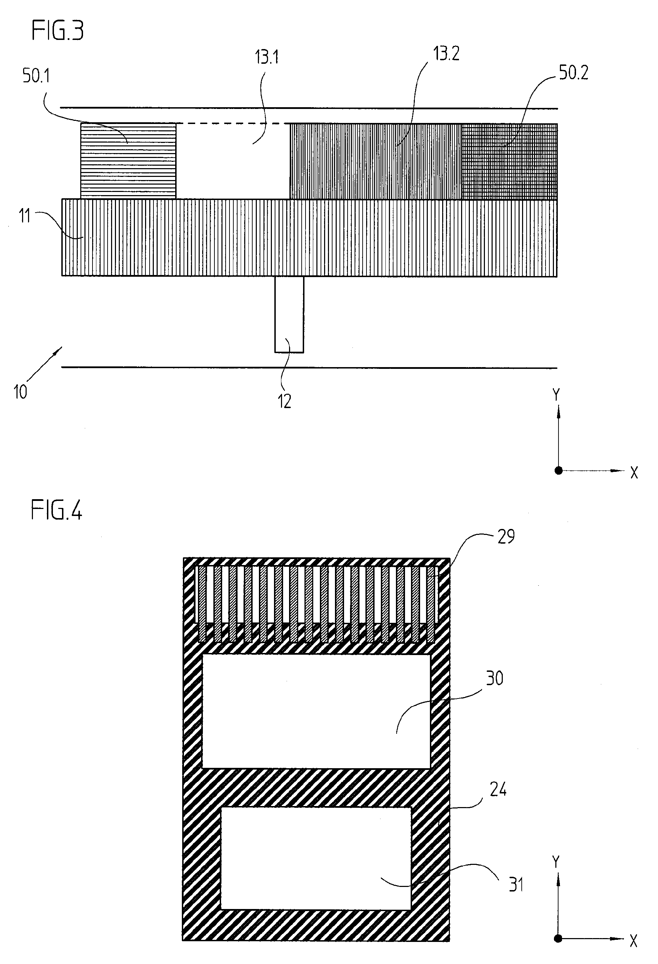

Ein erstes Ausführungsbeispiel der erfindungsgemäßen Positionsmesseinrichtung, ausgebildet als Längenmesseinrichtung, ist in den Schnittansichten der Figuren 1 und 2 schematisch gezeigt. Hierbei sind in Figur 1 verschiedene Abtaststrahlengänge sowie in Figur 2 der Aufbau der Abtasteinheit veranschaulicht. Die dargestellte Positionsmesseinrichtung umfasst einen Maßstab 10 sowie eine relativ hierzu entlang der linearen Messrichtung x bewegliche Abtasteinheit 20. Im vorliegenden Ausführungsbeispiel wird die erfindungsgemäße Positionsmesseinrichtung im Auflicht betrieben, d.h. der Maßstab 10 ist als reflektiver Maßstab ausgebildet. Auf dem Maßstab 10 ist in einer mittig angeordneten Messteilungs-Spur eine inkrementale Messteilung 11 angeordnet; senkrecht zur Messrichtung x sind beidseitig benachbart zur Messteilungs-Spur eine Referenzmarkierungs-Spur mit mindestens einer Referenzmarkierung 12 sowie eine Bereichsmarkierungs-Spur mit zwei Bereichsmarkierungen 13.1, 13.2 angeordnet. Die verschiedenen Spuren auf dem Maßstab 10 erstrecken sich jeweils entlang bzw. parallel zur Messrichtung x. Der derart ausgebildete Maßstab ist in Figur 3 in einer Draufsicht gezeigt.

Zur optischen Abtastung des Maßstabs 10 umfasst die Abtasteinheit 20 eine auf einem Trägersubstrat 23 angeordnete, divergent abstrahlende Lichtquelle 21, z.B. eine LED, die ohne zwischengeschaltete Optikelemente ein periodisches Sendegitter 22 beleuchtet. Das Sendegitter 22 ist als Transmissions-Amplitudengitter mit der Periodizität $P_{SG}$ ausgebildet und auf der der Lichtquelle 21 zugewandten Seite einer transparenten Abtastplatte 24 angeordnet. In einer möglichen Variante dieses Ausführungsbeispiels wird die Sendegitter-Periodizität gemäß $P_{SG}$ = 1129$\mu$m gewählt. In den transparenten Bereichen des Sendegitters 22 ist im vorliegenden Ausführungsbeispiel ein weiteres Amplitudengitter angeordnet, das eine Periodizität $P_{SG,INc}$ aufweist, die der Periodizität $P_{MT}$ der dem Maßstab 10 vorgesehenen Messteilung 11 entspricht. Dieses Amplitudengitter fungiert dann als Sendegitter bei der Abtastung der Messteilung 11. Nach dem Durchlaufen des Sendegitters 22 wird das am Maßstab 10 auftreffende divergente Licht an der Messteilung 11, an der Referenzmarkierung 12 sowie an den Bereichsmarkierungen 13.1, 13.2 positionsabhängig reflektiert und gelangt dann auf eine Detektoranordnung 25. Die Detektoranordnung 25 umfasst im vorliegenden Ausführungsbeispiel einen Bereichssignal-Detektor 26, einen Inkrementalsignal-Detektor 27 sowie einen Referenzsignal-Detektor 28. Im Strahlengang des von den Bereichsmarkierungen 13.1, 13.2 zurückreflektierten Abtaststrahlenbündels ist zwischen dem Maßstab 10 und der Detektoranordnung 25 auf der Abtastplatte 24 ein Blendengitter 29 angeordnet, das als Transmissions-Amplitudengitter mit der Periodizität $P_{BG}$ ausgebildet ist; in einem möglichen Ausführungsbeispiel beträgt diese Periodizität $P_{BG}$ = 172$\mu$m.

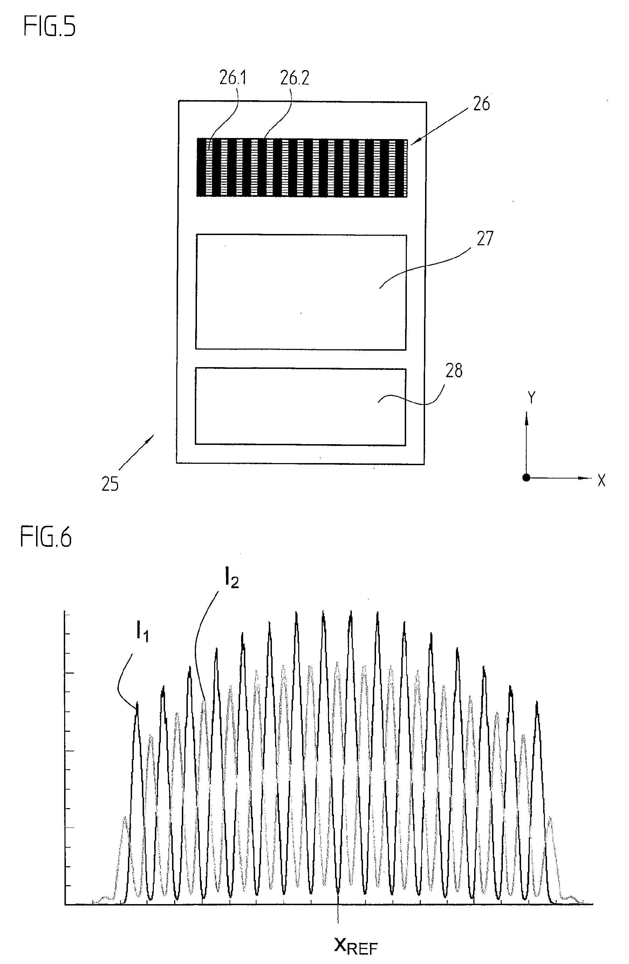

Eine Draufsicht auf die Detektor-Anordnung 25 mit den verschiedenen Detektoren 26, 27, 28 zur Erfassung der jeweiligen Signale ist in Figur 5 dargestellt. Figur 4 zeigt eine Draufsicht auf die dem Maßstab 10 zugewandte Seite der Abtastplatte 24 mit dem darauf angeordneten Blendengitter 29 sowie den durchlässigen bzw. optisch nicht wirksamen Bereichen 30, 31 für die Abtaststrahlenbündel aus dem Bereich der Messteilung 11 und der Referenzmarkierung 12.

Aus der optischen Abtastung der Messteilung 11, die die Periodizität $P_{MT}$ aufweist und in einem möglichen Ausführungsbeispiel $P_{MT}$ = 8$\mu$m beträgt, werden periodische Messsignale in Form mehrerer phasenverschobener Inkrementalsignale erzeugt. Nicht maßgeblich für die vorliegende Erfindung ist hierbei die konkret verwendete optische Abtastung zur Erzeugung der Inkrementalsignale. Es ist möglich, hierzu unterschiedliche optische Abtastprinzipien einzusetzen, die z.B. auf dem aus der Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 332 bekannten Grundprinzip basieren. Die Inkrementalsignale können sodann in bekannter Art und Weise von einer nachgeordneten - nicht gezeigten - Steuereinheit weiterverarbeitet werden. Auf diese Art und Weise ist es möglich, relativ zueinander bewegliche Maschinenteile zu positionieren, welche mit der Abtasteinheit 20 und dem Maßstab 10 verbunden sind.

Um für die derart erzeugten Inkrementalsignale einen absoluten Positionsbezug an einer definierten Referenzposition $X_{REF}$ herzustellen, weist der Maßstab 10 zumindest eine Referenzmarkierung 12 in der Referenzmarkierungs-Spur auf. Aus der optischen Abtastung der Referenzmarkierung 12 ist ein von der Steuereinheit weiterverarbeitbares Referenzsignal REF erzeugbar. In Bezug auf die Ausbildung der Referenzmarkierung 12 und deren optischer Abtastung gibt es im Rahmen der vorliegenden Erfindung grundsätzlich verschiedene Möglichkeiten. Es können hierbei optische Abtastungen eingesetzt werden, wie sie z.B. aus der DE 10 2008 044 858 A1 oder der DE 10 2011 076 055 A1 der Anmelderin bekannt sind.

Über die optische Abtastung der Bereichsmarkierungs-Spur wird in der erfindungsgemäßen Vorrichtung ein Bereichssignal B erzeugt, durch das unterscheidbar ist, ob sich die Abtasteinheit 20 links oder rechts von der Referenzmarkierung 12 befindet. Hierzu sind Bereichsmarkierungen 13.1, 13.2 auf dem Maßstab 10 aufgebracht, durch die unterschieden werden kann, wo sich die Abtasteinheit 20 relativ zur Referenzmarkierung 12 befindet. Die in der Maßstab-Ansicht der Figur 3 linke Seite sei hierbei im folgenden als erste Seite bezeichnet, die rechte Seite als zweite Seite.

Auf der ersten Seite ist im vorliegenden ersten Ausführungsbeispiel der erfindungsgemäßen Positionsmesseinrichtung die Bereichsmarkierung 13.1 in der Bereichsmarkierungs-Spur reflektierend ausgebildet, auf der zweiten Seite ist in der Bereichsmarkierungs-Spur ein als Phasengitter ausgebildetes Reflexions-Beugungsgitter als Bereichsmarkierung 13.2 angeordnet. Auf das darauf auftreffende Abtaststrahlenbündel üben die unterschiedlich ausgebildeten Bereichsmarkierungen 13.1, 13.2 auf der ersten und zweiten Seite der Referenzmarkierung 12 somit unterschiedliche Ablenkwirkungen aus. Auf diese Art und Weise lässt sich - wie nachfolgend im Detail erläutert wird - ein Bereichssignal B erzeugen, das die Position der Abtasteinheit 20 relativ zur Referenzmarkierung 12 charakterisiert.

Das Reflexions-Beugungsgitter der Bereichsmarkierung 13.2 erstreckt sich in der Bereichsmarkierung-Spur wie die Messteilung 11 in der Messteilungs-Spur periodisch entlang der Messrichtung x. In einer möglichen Ausführungsform der erfindungsgemäßen Positionsmesseinrichtung besitzt das Reflexions-Beugungsgitter der Bereichsmarkierung 13.1 eine Periodizität $P_{BM} = 3\mu m$ und unterscheidet sich somit hinsichtlich seiner Periodizität von der Messteilung mit der Periodizität $P_{MT} = 8\mu m$. Näherungsweise wird die Periodizität $P_{Bm}$ des Reflexions-Beugungsgitters dabei vorteilhafterweise folgendermaßen gewählt:

$$P_{BM} = \lambda / (\sin (\mathrm{atan}(P_{SG} (u + v)))) \qquad (\text{Gl. 1})$$

mit:

$P_{BM}$ := Periodizität des Reflexions-Beugungsgitters der Bereichsmarkierung

u := zurückgelegte Weglänge der Abtaststrahlenbündel zwischen dem Sendegitter über den Maßstab bis zum Blendengitter

v := zurückgelegte Weglänge der Abtaststrahlenbündel zwischen dem Blendengitter und der Detektionsebene des Bereichssignal-Detektors

A := Wellenlänge der verwendeten Lichtquelle

$P_{SG}$ := Periodizität des Sendegitters

Im vorliegenden ersten Ausführungsbeispiel der erfindungsgemäßen Positionsmesseinrichtung ist das Beugungsgitter der Bereichsmarkierung 13.2 als Phasengitter mit resultierenden +/- 1. Beugungsordnungen und unterdrückter 0. Beugungsordnung ausgebildet.

Im Abtaststrahlengang zur Erzeugung des Bereichssignals B ist im weiteren Strahlverlauf, d.h. in Strahlausbreitungsrichtung dem Maßstab 10 nachgeordnet, ein periodisches Blendengitter 29 sowie ein Bereichssignal-Detektor 26 angeordnet. Wie aus Figur 1 ersichtlich, befindet sich das periodische Blendengitter 29 zwischen dem Maßstab 10 und dem Bereichssignal-Detektor 26. Das in Figur 4 in einer Draufsicht gezeigte Blendengitter 29 ist als Transmissions-Amplitudengitter ausgebildet, das aus periodisch in Messrichtung x angeordneten, durchlässigen und undurchlässigen Teilungsbereichen besteht. Die Periodizität $P_{BG}$ des Blendengitters 29 ist im vorliegenden Ausführungsbeispiel gemäß $P_{BG} = 172\mu m$ gewählt. Vorzugsweise ergibt sich die Periodizität $P_{BG}$ des Blendengitters 29 gemäß folgender Beziehung

$$P_{BG} = u / (u + v) \cdot P_{BD} \qquad (\text{Gl. 2})$$

mit:

$P_{BG}$ := Periodizität des Blendengitters

u := zurückgelegte Weglänge der Abtaststrahlenbündel zwischen dem Sendegitter über den Maßstab bis zum Blendengitter

v := zurückgelegte Weglänge der Abtaststrahlenbündel zwischen dem Blendengitter und der Detektionsebene des Bereichssignal-Detektors

$P_{BD}$ := Periodizität des Bereichssignal-Detektors

Das Blendengitter 29 wird bei der vorgesehenen optischen Abtastung in der erfindungsgemäßen Positionsmesseinrichtung gemäß dem Strahlensatz, ausgehend vom Sendegitter 22, geometrisch-vergrößert in die Detektionsebene des Bereichssignal-Detektors 26 abgebildet. Aus der in Figur 5 gezeigten Ansicht der Detektionsebene der Detektoranordnung 25 ist ersichtlich, dass der Bereichssignal-Detektor 26 aus zwei Gruppen von periodisch alternierend angeordneten Detektorelementen 26.1, 26.2 besteht, wobei die Detektorelemente 26.1, 26.2 beider Gruppen identisch ausgebildet sind. Die Detektorelemente 26.1, 26.2 einer Gruppe sind hierbei jeweils miteinander verschaltet. Wie aus der Figur ferner ersichtlich, erstreckt sich die periodische Anordnung der Detektorelemente 26.1, 26.2 im Bereichssignal-Detektor 26 entlang der Messrichtung x. Die einzelnen Detektorelemente 26.1, 26.2 des Bereichssignal-Detektors 26 sind rechteckförmig ausgebildet, wobei deren Längsachse in der angegebenen y-Richtung senkrecht zur Messrichtung x orientiert ist.

Lediglich schematisiert sind in Figur 5 im Übrigen der Inkrementalsignal-Detektor 27 und der Referenzsignal-Detektor 28 dargestellt; deren konkrete Ausbildung ist nicht wesentlich für die vorliegende Erfindung. Hier können unterschiedlichste bekannte Detektorvarianten zum Einsatz kommen.

Mit der Bezeichnung u wird vorliegend die zurückgelegte Weglänge der Abtaststrahlenbündel zwischen dem Sendegitter 22 über den Maßstab 10 bis zum Blendengitter 29 bezeichnet; die Bezeichnung v wird für die zurückgelegte Weglänge der Abtaststrahlenbündel zwischen dem Blendengitter 29 und der Detektionsebene des Bereichssignal-Detektors 26 verwendet. In einem möglichen Ausführungsbeispiel werden diese Größen gemäß u = 3.471mm und v = 0.565mm gewählt. Die Detektorelemente 26.1, 26.2 des Bereichssignal-Detektors 26 besitzen in Messrichtung x eine Breite $b_{BD}$ = 100$\mu$m, d.h. die Periodizität $P_{BD}$des Bereichssignal-Detektors 26 beträgt entlang der Messrichtung x somit $\mathbf{P_{BD}}$ = 200$\mu$m und ist identisch mit der Periodizität des in die Detektionsebene abgebildeten Blendengitters 29.

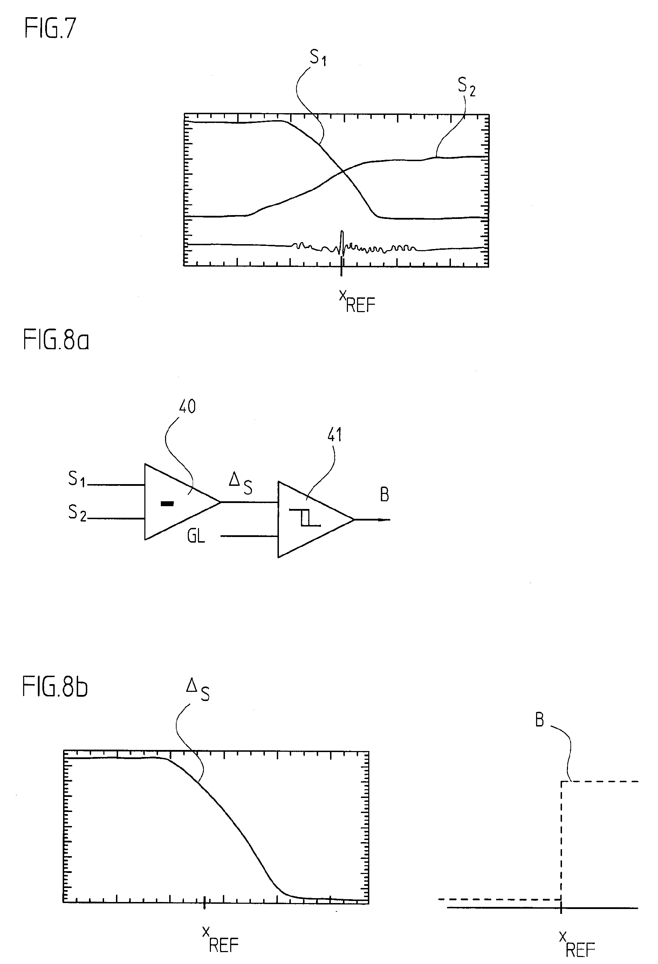

Zur Erzeugung des Bereichssignals B aus der optischen Abtastung der unterschiedlich ausgebildeten Bereichsmarkierungen 13.1, 13.2 auf dem Maßstab 10 ist vorgesehen, die Periodizität $P_{BG}$ des Blendengitters 29 und die Periodizität $P_{BD}$ des Bereichssignal-Detektors 26 in definierter Art und Weise zu wählen und das Blendengitter 29 sowie den Bereichssignal-Detektor 26 in definierter Art und Weise anzuordnen. Dies erfolgt in diesem Ausführungsbeispiel derart, dass für den Fall, in dem sich die Abtasteinheit 20 auf der ersten Seite der Referenzmarkierung 12 befindet, die erste Gruppe von Detektorelementen 26.1 ein maximales Abtastsignal $S_1$ und die zweite Gruppe von Detektorelementen 26.2 ein minimales Abtastsignal $S_2$ registriert. Für den Fall, dass sich die Abtasteinheit 20 auf der zweiten Seite der Referenzmarkierung 12 befindet, gewährleisten die gewählten Periodizitäten $P_{BG}$, $P_{BD}$ sowie die Anordnung des Blendengitters 29 und des Bereichssignal-Detektors 26, dass die erste Gruppe von Detektorelementen 26.1 ein minimales Abtastsignal $S_1$ und die zweite Gruppe von Detektorelementen 26.2 ein maximales Abtastsignal $S_2$ registriert. Der entsprechende Verlauf der Abtastsignale $S_1$, $S_2$ des Bereichssignal-Detektors 26 im Bereich der Referenzposition $X_{REF}$ bzw. links und rechts von der Referenzmarkierung ist in Figur 7 gezeigt; im unteren Teil dieser Figur ist zudem das erzeugte Referenzsignal dargestellt. Wie aus Figur 7 ersichtlich, sind die derart erzeugten Abtastsignale $S_1$, $S_2$ im ersten und zweiten Bereich auch im Fall der Relativbewegung von Maßstab 10 und Abtasteinheit 20 jeweils i.w. statisch und weisen insbesondere keinen durch die Inkrementalsignalerzeugung verursachten oszillierenden Signalanteil auf. Dadurch vereinfacht sich die Weiterverarbeitung der Abtastsignale $S_1$, $S_2$ erheblich. Aus den derart erzeugten Abtastsig-nalen $S_i$ $S_2$ wird durch eine nachfolgend noch erläuterte Verknüpfung über eine geeignete Schaltungsanordnung das weiterverarbeitbare Bereichssignal B gebildet.

Beaufschlagt somit das Abtaststrahlenbündel im vorliegenden Ausführungsbeispiel die Bereichsmarkierung 13.1 auf der ersten bzw. linken Seite der Referenzmarkierung 12, wo diese reflektierend ausgebildet ist, so erfolgt eine gegenüber der optischen Achse unverschobene Abbildung des Blendengitters 29 in die Detektionsebene der Detektoranordnung 25. Die Periodizität des dort resultierenden periodischen Hell-Dunkel-Streifenmusters entspricht der Periodizität $P_{BD}$ des Bereichssignal-Detektors 26. Die erste Gruppe von Detektorelementen 26.1 erfasst dabei an den hellen Stellen des Streifenmusters jeweils Signalmaxima, die zweite Gruppe von Detektorelementen 26.2 erfasst an den dunklen Stellen des Streifenmusters jeweils Signalminima, so dass ein Verlauf der Abtastsignale $S_1$, $S_2$ resultiert wie in Figur 7 gezeigt.

Befindet sich die Abtasteinheit 20 hingegen über der zweiten bzw. rechten Seite der Referenzmarkierung 12 und beaufschlagt das Strahlenbündel die dort als Beugungsgitter ausgebildete Bereichsmarkierung 13.2, so resultiert in der Detektionsebene des Bereichssignal-Detektors 26 ein in Messrichtung x gegenüber dem vorherigen Fall ein um eine halbe Hell-Dunkel-Periode verschobenes Streifenmuster. Dieses weist die gleiche Periodizität auf wie im vorherigen Fall, d.h. dessen Periodizität entspricht der Periodizität $P_{BD}$ des Bereichssignal-Detektors 26. Die erste Gruppe von Detektorelementen 26.1 erfasst aufgrund des verschobenen Streifenmusters in der Detektionsebene nunmehr an den dunklen Stellen des Streifenmusters jeweils Signalminima, die zweite Gruppe von Detektorelementen 26.2 erfasst an den hellen Stellen des Streifenmusters jeweils Signalmaxima.

Anschaulich lässt sich in diesem Ausführungsbeispiel die unterschiedliche optische Ablenkwirkung in den Bereichsmarkierungen 13.1, 13.2 auf das einfallende Abtaststrahlenbündel folgendermaßen verständlich machen: Betrachtet man das einfallende Abtaststrahlenbündel als ebene Wellenfronten, so resultiert im Bereich der Bereichsmarkierung 13.2 mit dem Beugungsgitter eine Verkippung der Wellenfronten um einen definierten Winkel dergestalt, dass das periodische Intensitätsmuster in der Detektionsebene um eine halbe Periode weiterwandert.

Die in diesem Ausführungsbeispiel der erfindungsgemäßen Vorrichtung in beiden Fällen am Bereichssignal-Detektor 26 vorliegenden Intensitätsverteilungen $I_1$, $I_2$ in der Detektionsebene sind in Figur 6 gezeigt. Als schwarze Kurve ist hierbei in der Figur die Intensitätsverteilung $I_1$ dargestellt, die aus der optischen Abtastung der ersten, reflektierend ausgebildeten Bereichsmarkierung 13.1 resultiert; als graue Kurve ist die Intensitätsverteilung $I_2$ dargestellt, die aus der optischen Abtastung der zweiten, mit einem Beugungsgitter versehenen Bereichsmarkierung 13.2 resultiert. Wie aus Figur 6 ersichtlich, sind die Intensitätsverteilungen $I_1$, $I_2$ für die beiden Fälle entlang der Messrichtung x um eine halbe Signalperiode gegeneinander verschoben. Aus den Abtastsignalen $S_1$, $S_2$, die mittels des Bereichssignal-Detektors 26 aus diesen Intensitätsverteilungen erzeugt werden, kann somit auf die Position der Abtasteinheit 20 relativ zur Referenzmarkierung 12 geschlossen werden.

Über die als Beugungsgitter ausgebildete Bereichsmarkierung 13.2 auf der zweiten Seite der Referenzmarkierung 12 erfolgt aufgrund der unterschiedlichen Ablenkwirkung auf das Abtaststrahlenbündel damit in diesem Ausführungsbeispiel eine definierte Verschiebung des in der Detektionsebene resultierenden Streifenmusters senkrecht zur optischen Achse im Vergleich zur unverschobenen Abbildung des Blendengitters 29, wenn sich die Abtasteinheit 20 über der Bereichsmarkierung 13.1 auf der ersten Seite befindet.

Aus den derart erzeugten Abtastsignalen $S_1$, $S_2$ kann dann wie nachfolgend erläutert ein Bereichssignal B erzeugt werden. Dieses gibt eindeutig an, auf welcher Seite der Referenzmarkierung 12 sich die Abtasteinheit 20 gerade befindet. Hierzu werden gemäß Figur 8a die Abtastsignale $S_1$, $S_2$ den beiden Eingängen eines Differenzbildungselements 40 zugeführt; das am Ausgang des Differenzbildungselements 40 resultierende Differenzsignal $\Delta S = S_1 - S_2$ ist im linken Teil von Figur 8b gezeigt. Wie daraus ersichtlich, besitzt dieses Signal $\Delta S$ im Bereich der Referenzposition $X_{REF}$ eine Signalflanke mit stetigem Verlauf und einem Nulldurchgang beim Übergang der beiden Bereichsmarkierungen 13.1, 13.2. Zur Erfassung des Nulldurchgangs des Differenzsignal $\Delta S$ wird dieses einem ersten Eingang eines Komparatorelements 41 zugeführt, an dessen zweitem Eingang ein Referenzsignal GL anliegt. Das derart getriggerte, rechteckförmige Ausgangssignal des Komparatorelements 41 stellt schließlich das Bereichssignal B dar, das im rechten Teil der Figur 8b gezeigt ist, und das abhängig von der Position der Abtasteinheit relativ zur Referenzposition $X_{REF}$ einen eindeutigen Signalpegel besitzt. So nimmt das Bereichssignal im dargestellten Beispiel den Wert "0" an, wenn sich die Abtasteinheit auf der ersten (linken) Seite der Referenzmarkierung befindet und den Wert "1", wenn sich die Abtasteinheit auf der zweiten (rechten) Seite der Referenzmarkierung.

Bei der aus der eingangs erwähnten DE 101 32 521 A1 bekannten Positionsmesseinrichtung sind zusätzlich zu den Bereichsmarkierungen links und rechts von der Referenzmarkierung sogenannte Steuermarken an den Enden des Maßstabs angebracht. Diese Steuermarken definieren die möglichen Extremlagen der Abtasteinrichtung und werden auch als Endlagenschalter oder Limitmarkierungen bezeichnet. Positionsmesseinrichtungen mit derartigen Endlagenschaltern bzw. Limitmarkierungen sind auch in der DE 41 11 873 C2 und der EP 0 145 844 B1 beschrieben.

In der vorliegenden erfindungsgemäßen Positionsmesseinrichtung ist die Funktion derartiger Limitmarkierungen besonders vorteilhaft realisierbar, indem in entsprechenden Teilbereichen der Bereichsmarkierungs-Spur die optische Wirkung der dort angeordneten Bereichsmarkierungen 13.1, 13.2 verändert ausgebildet wird. Hierzu ist im dargestellten Ausführungsbeispiel gemäß der Maßstab-Draufsicht in Figur 3 vorgesehen, in den Limitbereichen 50.1, 50.2 der Bereichsmarkierungs-Spur senkrecht zur Messrichtung x orientierte Transmissionsgitter anzuordnen. Wie aus Figur 3 ersichtlich, erstrecken sich diese Transmissionsgitter entlang der y-Richtung, also senkrecht zur Messrichtung x; die Längsrichtung der durchlässigen und undurchlässigen Teilungsbereiche dieser Transmissionsgitter ist parallel zur Messrichtung x orientiert. Die Periodizität $P_{LM}$ der Transmissionsgitter in den Limitbereichen 50.1, 50.2 wird in einem möglichen Ausführungsbeispiel gemäß $P_{LM} = 250\mu m$ gewählt. Alternativ hierzu könnten anstelle von Transmissionsgittern auch Reflexionsgitter eingesetzt werden, bei denen die Stege reflektierend und die Lücken absorbierend ausgebildet sind.

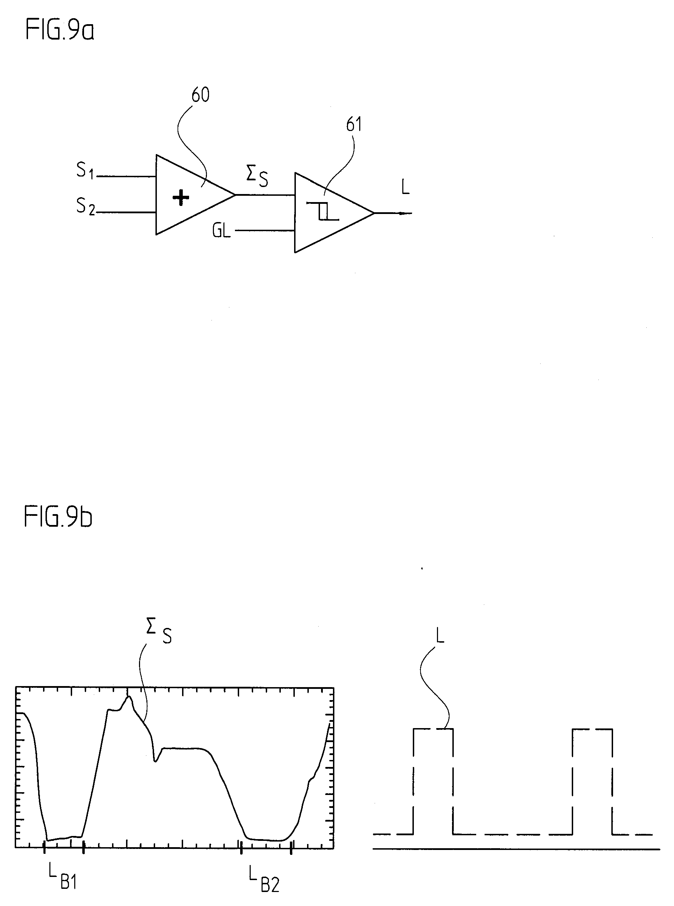

Die zusätzlich vorgesehenen Gitter in den Limitbereichen 50.1, 50.2, hier ausgebildet als Transmissionsgitter, beeinflussen die Abtastsignale $S_1$, $S_2$ des Bereichssignal-Detektors 26, insbesondere das ansonsten i.w. konstante Summensignal $\Sigma S = S1 + S2$ aus den beiden Abtastsignalen $S_1$, $S_2$. Sobald die Abtasteinheit sich über einem der Limitbereiche 50.1, 50.2 befindet, resultiert aufgrund der dortigen reduzierten Reflexionswirkung der Transmissionsgitter auf das Abtaststrahlenbündel eine Reduzierung der reflektierten Intensität, was einen deutlichen Einbruch des Summensignals $\Sigma S$ in den Bereichen LB1, LB2 zur Folge hat. Der Verlauf des Summensignals $\Sigma S$ und insbesondere der erwähnte Signaleinbruch in den Bereichen LB1, LB2 ist im linken Teil der Figur 9b gezeigt. Zur Erzeugung des rechteckförmigen Limitsignals L ist gemäß der Schaltungsanordnung in Figur 9a vorgesehen, die Abtastsignale $S_1$, $S_2$ des

Bereichssignal-Detektors 26 einem Additionselement 60 zuzuführen und das Summensignal $\Sigma S$ zu erzeugen. Das Summensignal $\Sigma S$ wird dann einem ersten Eingang eines Komparatorelements 61 zugeführt, an dessen zweitem Eingang ein Referenzsignal GL anliegt. Das Referenzsignal GL kann hierbei ebenfalls optisch erzeugt werden, z.B. kann hierzu ein sog. Referenzmarkierungs-Gleichlichtsignal verwendet werden. Das derart getriggerte Ausgangssignal des Komparatorelements 61 repräsentiert schließlich das rechteckförmige Limitsignal L, das im rechten Teil der Figur 9b gezeigt ist. Darüber kann auf Seiten der Folgeelektronik erkannt werden, dass die Abtasteinheit die Limitbereiche 50.1, 50.2 des zulässigen Verfahrbereichs erreicht hat.

Auf diese Art und Weise können somit vier verschiedene Bereiche des Maßstabs 10 unterschieden werden, nämlich linker Limitbereich, linker Bereich von der Referenzmarkierung, rechter Bereich von der Referenzmarkierung sowie rechter Limitbereich. Da die unterschiedliche Ablenkung des Abtaststrahlenbündels in den Limitbereichen 50.1, 50.2 erhalten bleibt, ist auch in den Teilbereichen der Bereichsmarkierungsspur mit den Limitbereichen 50.1, 50.2 die Richtungsinformation - rechte Seite bzw. linke Seite von der Referenzmarkierung - über das Bereichssignal B vorhanden.

Neben der Ausbildung der Limitbereiche 50.1, 50.2 als über den Bereichsmarkierungen 13.1, 13.2 angeordnete Transmissionsgitter gibt es auch alternative Realisierungsmöglichkeiten. So ist es möglich, die Limitbereiche in den gewünschten Teilbereichen der Bereichsmarkierungs-Spur als absorbierende Schichten auszubilden, den Maßstab geeignet zu ablatieren oder aber eine Blendenstruktur in diesen Bereichen lösbar am Maßstab anzuordnen. Grundsätzlich wird bei all diesen Varianten die optische Wirkung der Bereichsmarkierungen auf das Abtaststrahlenbündel partiell verändert. Generell sollte dabei eine Reduzierung der Signalintensität der Abtastsignale des Bereichssignal-Detektors im Bereich zwischen 20% und 80% resultieren. Dadurch bleibt gewährleistet, dass auch in diesen Bereichen ein Bereichssignal B sicher erzeugbar ist.

Desweiteren ist es alternativ zur dargestellten Variante in Figur 3 auch möglich, die Limitbereiche in der Referenzmarkierungsspur auf dem Maßstab anzuordnen. Analog zum erläuterten Beispiel sind auch in diesem Fall die Limitbereiche derart auszubilden, indem die optische Wirkung in den entsprechenden Bereichen der Referenzmarkierungsspur geeignet partiell verändert wird. Ansonsten sei in Bezug auf eine derartige Variante auf die Erläuterungen zum vorhergehenden Beispiel verwiesen.

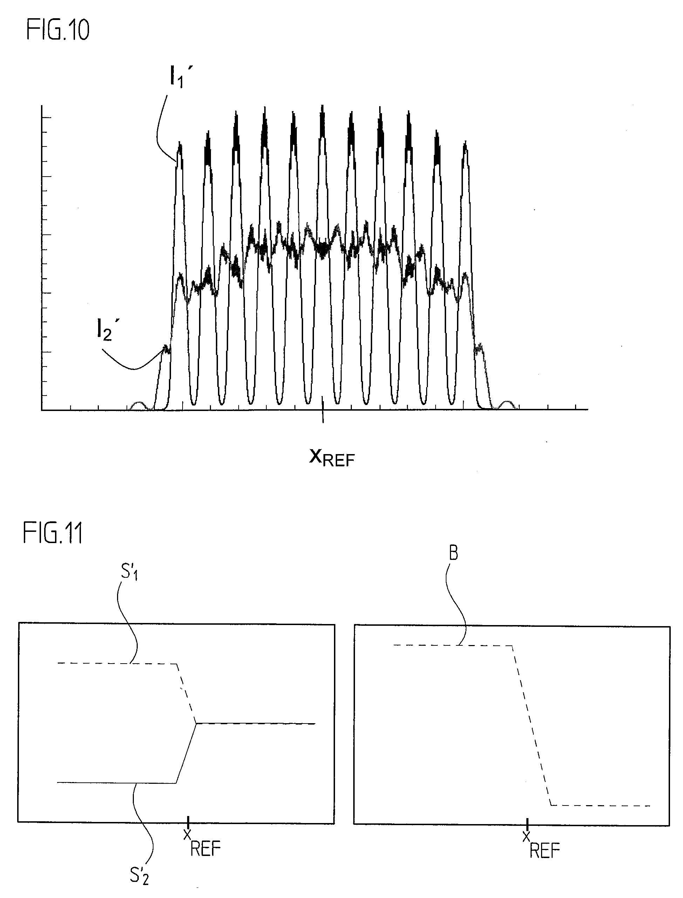

Ein zweites Ausführungsbeispiel der erfindungsgemäßen Positionsmesseinrichtung wird nachfolgend anhand der Figuren 10 und 11 beschrieben; diese entsprechen i.w. den Darstellungen aus den Figuren 7 und 8b des ersten Ausführungsbeispiels. Es wird dabei i.w. nur auf die maßgeblichen Unterschiede zum bereits erläuterten ersten Ausführungsbeispiel eingegangen.

Im ersten Ausführungsbeispiel war das Beugungsgitter der zweiten Bereichsmarkierung 13.2 derart ausgebildet, dass die 0. Beugungsordnung weitgehend unterdrückt und zur Signalgewinnung primär die resultierenden +/- 1. Beugungsordnungen herangezogen werden. Im vorliegenden zweiten Ausführungsbeispiel ist nunmehr als Beugungsgitter der zweiten Bereichsmarkierung ein Amplituden- oder Phasengitter vorgesehen, das neben den +/- 1. Beugungsordnungen auch eine starke resultierende 0. Beugungsordnung besitzt. Im Fall einer Ausbildung als Phasengitter weist dieses etwa einen Phasenhub von 90° auf.

Aufgrund der Verwendung eines derart ausgebildeten Beugungsgitters für die zweite Bereichsmarkierung resultiert beim Übergang des Abtaststrahlenbündels von der ersten reflektierenden Bereichsmarkierung zur zweiten Bereichsmarkierung mit dem entsprechend ausgebildeten Beugungsgitter keine örtliche Verschiebung des statischen Streifenmusters in der Detektionsebene, sondern eine Reduzierung der gemittelten Intensität dieses Streifenmusters. Bei der Abtastung der unterschiedlichen Bereichsmarkierungen werden somit Streifenmuster mit unterschiedlichen gemittelten Intensitäten in der Detektionsebene des Bereichssignal-Detektors erzeugt. In Figur 10 ist dies analog zur Darstellung der Figur 6 für das zweite Ausführungsbeispiel gezeigt, in dem ein entsprechend ausgebildetes Beugungsgitter als zweite Bereichsmarkierung mit der Periodizität $P_{BM} = 3\mu m$ verwendet wird. Mit $I_1'$ (schwarze Kurve) wird in Figur 10 die Intensitätsverteilung des Streifenmusters in der Detektionsebene bezeichnet, wenn die erste reflektierende Bereichsmarkierung abgetastet wird; diese ist identisch mit der resultierenden Intensitätsverteilung $I_1$ **im** ersten Ausführungsbeispiel. Mit $I_2'$ (graue Kurve) wird in Figur 10 die Intensitätsverteilung des Streifenmusters in der Detektionsebene bezeichnet, wenn die zweite, als Beugungsgitter ausgebildete Bereichsmarkierung abgetastet wird, das nunmehr eine starke 0. Beugungsordnung aufweist. Wie aus der Figur ersichtlich, besitzt in diesem Fall das resultierende Streifenmuster eine geringere gemittelte Intensität. Aus den unterschiedlichen gemittelten Intensitäten der erzeugten Abtastsignale $S_1'$, $S_2'$ lässt sich wieder ein eindeutiges Bereichssignal B erzeugen.

Der zur Abtastung des Streifenmusters in der Detektionsebene genutzte Bereichssignal-Detektor ist hierbei ausgebildet wie im obigen, ersten Ausführungsbeispiel und umfasst zwei Gruppen von miteinander verschalteten Detektorelementen, die die Abtastsignale $S_1'$, $S_2'$ erzeugen, wie sie für das zweite Ausführungsbeispiel im linken Teil der Figur 11 gezeigt sind. Die Abtastsignale $S_1'$, $S_2'$ werden dann einer Schaltungsanordnung wie in Figur 8a dargestellt zugeführt, an deren Ausgang dann das weiterverarbeitbare Bereichssignal B' anliegt, das im rechten Teil der Figur 11 gezeigt ist. Um im vorliegenden Ausführungsbeispiel ein derartiges Bereichssignal B' zu erzeugen, müssen jedoch im Unterschied zum obigen Ausführungsbeispiel am Differenzbildungs-Element die Verstärkungsfaktoren $V_1$, $V_2$ für die zugeführten Abtastsignale $S_1'$, $S_2'$ unterschiedlich gewählt werden; im gezeigten Ausführungsbeispiel sind etwa die

Verstärkungsfaktoren gemäß $V_1 = 1$, $V_2 = 2$ gewählt.

In abgewandelten Varianten des zweiten Ausführungsbeispiels der erfindungsgemäßen Positionsmesseinrichtung können für das Beugungsgitter der zweiten Bereichsmarkierung selbstverständlich auch andere Teilungsperioden verwendet werden. Im Fall einer alternativ gewählten Periodizität $P_{BM} = 3\mu m$ des Beugungsgitters reduziert sich die gemittelte Intensität bei der Abtastung der zweiten Bereichsmarkierung nicht so deutlich wie im Beispiel der Figur 10. Durch die geeignete Wahl der Verstärkungsfaktoren des Differenzbildungs-Elements kann aber wie oben erläutert nichtsdestotrotz ein geeignetes Bereichssignal erzeugt werden.

Neben den konkret beschriebenen Ausführungsbeispielen existieren im Rahmen der vorliegenden Erfindung selbstverständlich noch weitere Ausgestaltungsmöglichkeiten.

So ist beispielsweise möglich, die erfindungsgemäße Positionsmesseinrichtung als Durchlichtsystem auszubilden, bei dem ein Transmissions-Maßstab eingesetzt wird.

Das vorgesehene Blendengitter im Strahlengang des Abtaststrahlenbündels zur Erzeugung des Bereichssignals kann desweiteren auch als Phasengitter ausgebildet werden.

Es ist desweiteren auch eine Anordnung des Blendengitter auf jeder Seite der Abtastplatte möglich. Denkbar ist hierbei etwa auch eine Anordnung des Blendengitters auf der Vorderseite der Abtastplatte und die Anordnung eines geeignete ausgebildeten Detektors auf der gegenüberliegenden Rückseite der Abtastplatte.

Ferner könnte anstelle der mittigen Anordnung der Messteilungsspur auf dem Maßstab auch vorgesehen werden, die Referenzmarkierung-Spur mittig anzuordnen und jeweils seitlich benachbart dazu die Bereichsmarkierungs-Spur und die Messteilungsspur.

Desweiteren können anstelle von Positionsmesseinrichtungen zur Erfassung von Linearbewegungen selbstverständlich auch Positionsmesseinrichtungen zur Erfassung von rotatorischen Bewegungen entsprechend ausgebildet werden usw..

**Patentansprüche**

1. Positionsmesseinrichtung mit einem Maßstab (10) und einer relativ dazu in Messrichtung (x) beweglichen Abtasteinheit (20), wobei

   - der Maßstab (10) eine Messteilung (11) aufweist und durch eine optische Abtastung der Messteilung (11) periodische Messsignale erzeugbar sind,
   - der Maßstab (10) zumindest eine Referenzmarkierung (12) aufweist und durch eine optische Abtastung der Referenzmarkierung (12) ein Referenzsignal (REF) erzeugbar ist,
   - der Maßstab (10) optisch abtastbare Bereichsmarkierungen (13.1, 13.2) aufweist und durch eine optische Abtastung der Bereichsmarkierungen (13.1, 13.2) mit einem Abtaststrahlenbündel und dessen Detektion über einen Bereichssignal-Detektor (26) ein Bereichssignal (B) erzeugbar ist, durch das unterscheidbar ist, ob sich die Abtasteinheit (20) auf der ersten oder der zweiten Seite der Referenzmarkierung (12) befindet, und
   - die Bereichsmarkierungen (13.1, 13.2) auf der ersten und zweiten Seite der Referenzmarkierung (12) unterschiedliche Ablenkwirkungen auf das darauf auftreffende Abtaststrahlenbündel ausüben,

   **dadurch gekennzeichnet, dass**
   zwischen dem Maßstab (10) und dem Bereichssignal-Detektor (26) ein periodisches Blendengitter (29) angeordnet ist, welches derart ausgebildet und angeordnet ist, dass bei der optischen Abtastung der Bereichsmarkierungen (13.1, 13.2) in der Detektionsebene des Bereichssignal-Detektors (26) ein Streifenmuster resultiert, aus dem abhängig von der Position der Abtasteinheit (20) relativ zur Referenzmarkierung (12) mindestens zwei unterscheidbare Abtastsignale ($S_1$, $S_2$; $S_1'$, $S_2'$) erzeugbar sind.

2. Positionsmesseinrichtung nach Anspruch 1, **dadurch gekennzeichnet, dass** die Periodizität ($P_{BG}$ des Blendengitters (29) gemäß

$$P_{BG} = u \: / \: (u + v) \cdot P_{BD}$$

gewählt ist, mit:

   $P_{BG}$ := Periodizität des Blendengitters
   u := zurückgelegte Weglänge der Abtaststrahlenbündel zwischen dem Sendegitter über den Maßstab bis zum Blendengitter
v := zurückgelegte Weglänge der Abtaststrahlenbündel zwischen dem Blendengitter und der Detektionsebene des Bereichssignal-Detektors
$P_{BD}$ := Periodizität des Bereichssignal-Detektors

3. Positionsmesseinrichtung nach Anspruch 1, **dadurch gekennzeichnet, dass** die Bereichsmarkierung (13.1) auf der ersten Seite der Referenzmarkierung (12) reflektierend ausgebildet ist und die Bereichsmarkierung (13.2) auf der zweiten Seite der Referenzmarkierung (12) als Reflexions-Beugungsgitter ausgebildet ist.

4. Positionsmesseinrichtung nach Anspruch 3, **dadurch gekennzeichnet, dass** das Reflexions-Beugungsgitter der Bereichsmarkierung (13.2) eine unterschiedliche Periodizität ($P_{BM}$) besitzt als die Messteilung (11).

5. Positionsmesseinrichtung nach Anspruch 4, **dadurch gekennzeichnet, dass** die Periodizität ($P_{BM}$) des Reflexions-Beugungsgitters gemäß

$$P_{BM} = \lambda / (\sin (\operatorname{atan}(P_{SG} (u + v))))$$

gewählt ist, mit:

$P_{BM}$ := Periodizität des Reflexions-Beugungsgitters der Bereichsmarkierung
u := zurückgelegte Weglänge der Abtaststrahlenbündel zwischen dem Sendegitter über den Maßstab bis zum Blendengitter
v := zurückgelegte Weglänge der Abtaststrahlenbündel zwischen dem Blendengitter und der Detektionsebene des Bereichssignal-Detektors
$\lambda$:= Wellenlänge der verwendeten Lichtquelle
$P_{SG}$ := Periodizität des Sendegitters

6. Positionsmesseinrichtung nach mindestens einem der vorhergehenden Ansprüche, **dadurch gekennzeichnet, dass** die Bereichsmarkierungen (13.1, 13.2) in einer Bereichsmarkierungs-Spur und die Referenzmarkierung (12) in einer Referenzmarkierungs-Spur auf dem Maßstab (10) angeordnet sind, wobei sich die Bereichsmarkierungs-Spur und die Referenzmarkierungs-Spur parallel entlang der Messrichtung (x) erstrecken.

7. Positionsmesseinrichtung nach Anspruch 6, **dadurch gekennzeichnet, dass** der Maßstab (10) mehrere Limitbereiche (50.1, 50.2) aufweist, wobei die Limitbereiche (50.1, 50.2) durch partielles Verändern der optischen Wirkung der Bereichsmarkierungen (13.1, 13.2) oder der Referenzmarkierungs-Spur ausgebildet sind.

8. Positionsmesseinrichtung nach Anspruch 7, **dadurch gekennzeichnet, dass** die Limitbereiche (50.1, 50.2) mindestens in Teilbereichen der Bereichsmarkierungs-Spur oder der Referenzmarkierungs-Spur ausgebildet sind, wobei in den Limitbereichen (50.1, 50.2) senkrecht zur Messteilung (11) orientierte Transmissionsgitter oder Reflexionsgitter angeordnet sind.

9. Positionsmesseinrichtung nach mindestens einem der vorhergehenden Ansprüche, **gekennzeichnet durch** eine divergent abstrahlende Lichtquelle (21), die ohne zwischengeschaltete Optikelemente ein periodisches Sendegitter (22) beleuchtet, dem in Strahlausbreitungsrichtung der Maßstab (10) mit der Messteilung (11), der mindestens einen Referenzmarkierung (12) und den Bereichsmarkierungen (13.1, 13.2) sowie das Blendengitter (29) und eine Detektoranordnung (25) mit dem Bereichssignal-Detektor (26), einem Inkrementalsignal-Detektor (27) und einem Referenzsignal-Detektor (28) nachgeordnet ist.

10. Positionsmesseinrichtung nach mindestens einem der vorhergehenden Ansprüche, **dadurch gekennzeichnet, dass** der Bereichssignal-Detektor (26) aus zwei Gruppen von periodisch alternierend angeordneten Detektorelementen (26.1, 26.2) besteht, wobei die Detektorelemente (26.1, 26.2) einer Gruppe jeweils miteinander verschaltet sind.

11. Positionsmesseinrichtung nach Anspruch 3, **dadurch gekennzeichnet, dass** das Beugungsgitter als Phasengitter mit resultierenden +/- 1. Beugungsordnungen und unterdrückter 0. Beugungsordnung ausgebildet ist, so dass beim Übergang des Abtaststrahlenbündels zwischen den Bereichsmarkierungen (13.1, 13.2) eine örtliche Verschiebung des Streifenmusters in der Detektionsebene resultiert.

**12.** Positionsmesseinrichtung nach Anspruch 10 und 11, **dadurch gekennzeichnet, dass**

- die Periodizitäten des Blendengitters (29) und des Bereichssignal-Detektors (26) derart gewählt und das Blendengitter (29) sowie der Bereichssignal-Detektor (26) derart angeordnet sind,

- dass im Fall der Position der Abtasteinheit (10) auf der ersten Seite der Referenzmarkierung (12) die erste Gruppe von Detektorelementen (26.1) ein maximales Abtastsignal ($S_1$) und die zweite Gruppe von Detektorelementen (26.2) ein minimales Abtastsignal ($S_2$) registriert und
- dass im Fall der Position der Abtasteinheit (10) auf der zweiten Seite der Referenzmarkierung (12) die erste Gruppe von Detektorelementen (26.1) ein minimales Abtastsignal ($S_1$) und die zweite Gruppe von Detektorelementen (26.2) ein maximales Abtastsignal ($S_2$) registriert.

**13.** Positionsmesseinrichtung nach Anspruch 10 und 11, **dadurch gekennzeichnet, dass** zur Bildung des Bereichssignals (B) die Abtastsignale ($S_1$, $S_2$) der ersten und zweiten Gruppe von Detektorelementen (26.1, 26.2) einem Differenzbildungselement (40) zuführbar sind und aus dem resultierenden Differenzsignal ($\Delta S$) über ein nachgeordnetes Komparatorelement (41) das Bereichssignal (B) erzeugbar ist.

**14.** Positionsmesseinrichtung nach Anspruch 3, **dadurch gekennzeichnet, dass** das Beugungsgitter als Amplituden- oder Phasengitter mit resultierenden 0. und +/- 1. Beugungsordnungen ausgebildet ist, so dass bei der Abtastung der unterschiedlichen Bereichsmarkierungen Streifenmuster mit unterschiedlichen gemittelten Intensitäten ($I_1'$, $I_2'$) in der Detektionsebene resultieren.

**15.** Positionsmesseinrichtung nach Anspruch 14, **dadurch gekennzeichnet, dass** zur Bildung des Bereichssignals die Abtastsignale ($S_1'$, $S_2'$) der ersten und zweiten Gruppe von Detektorelementen unterschiedlich verstärkt einem Differenzbildungselement zuführbar sind und aus dem resultierenden Differenzsignal über ein nachgeordnetes Komparatorelement das Bereichssignal (B') erzeugbar ist.

## Claims

**1.** Position measuring device comprising a scale (10) and a scanning unit (20) movable relative thereto in a measuring direction (x), wherein

- the scale (10) has a measurement graduation (11) and periodic measurement signals are venerable by optical scanning of the measurement graduation (11),
- the scale (10) has at least one reference marking (12) and a reference signal (REF) is generable by optical scanning of the reference marking (12),
- the scale (10) has optically scannable area markings (13.1, 13.2) and an area signal (B) is generable by optical scanning of the area markings (13.1, 13.2) using a scanning beam and the detection thereof by way of an area signal detector (26), wherein said area signal renders it distinguishable whether the scanning unit (20) is situated on the first or second side of the reference marking (12), and
- the area markings (13.1, 13.2) exert different deflection effects on the scanning beam incident thereon on the first side and second side of the reference marking (12),

**characterized in that**
a periodic aperture grating (29) is arranged between the scale (10) and the area signal detector (26), said aperture grating being embodied and arranged in such a way that a strip pattern emerges during the optical scanning of the area markings (13.1, 13.2) in the detection plane of the area signal detector (26), from which strip pattern at least two distinguishable scanning signals ($S_1$, $S_2$, $S_1'$, $S_2'$) are generable depending on the position of the scanning unit (20) relative to the reference marking (12).

**2.** Position measuring device according to Claim 1, **characterized in that** the periodicity ($P_{BG}$) of the aperture grating (29) is selected in accordance with

$$P_{BG} = u/(u + v) \cdot P_{BD},$$

where

$P_{BG}$ := periodicity of the aperture grating,
u := travelled path length of the scanning beam between the transmission grating over the scale to the aperture grating,
v := travelled path length of the scanning beam between the aperture grating and the detection plane of the area signal detector,
$P_{BD}$ := periodicity of the area signal detector.

3. Position measuring device according to Claim 1, **characterized in that** the area marking (13.1) on the first side of the reference marking (12) has a deflecting embodiment and the area marking (13.2) on the second side of the reference marking (1.3.2) is embodied as a reflection diffraction grating.

4. Position measuring device according to Claim 3, **characterized in that** the reflection diffraction grating of the area marking (13.2) has a different periodicity ($P_{BM}$) than the measurement graduation (11).

5. Position measuring device according to Claim 4, **characterized in that** the periodicity ($P_{BM}$) of the reflection diffraction grating is selected in accordance with

$$P_{BM} = \lambda/(\sin(\text{atan}(P_{SG}(u + v)))),$$

where

$P_{BM}$ := periodicity of the reflection diffraction grating of the area marking,
u := travelled path length of the scanning beam between the transmission grating over the scale to the aperture grating,
v := travelled path length of the scanning beam between the aperture grating and the detection plane of the area signal detector,
$\lambda$ := wavelength of the employed light source
$P_{SG}$ := periodicity of the transmission grating.

6. Position measuring device according to at least one of the preceding claims, **characterized in that** the area markings (13.1, 13,2) are arranged in an area marking track and the reference marking (12) is arranged in a reference marking track on the scale (10), the area marking track and the reference marking track extending in parallel along the measuring direction (x).

7. Position measuring device according to Claim 6, **characterized in that** the scale (10) has a plurality of limit areas (50.1, 50.2), the limit areas (50.1, 50.2) being embodied by partial changing of the optical effect of the area markings (13.1, 13.2) or the reference marking track.

8. Position measuring device according to Claim 7, **characterized in that** the limit areas (50.1, 50.2) are embodied at least in portions of the area marking track or the reference marking track, with transmission gratings or reflection gratings oriented perpendicular to the measurement graduation (11) being arranged in the limit areas (50.1, 50.2).

9. Position measuring device according to at least one of the preceding claims, **characterized by** a divergently emitting light source (21), which illuminates a periodic transmission grating (22) without interposed optical elements, arranged downstream of which periodic transmission grating in the beam propagation direction are the scale (10) with the measurement graduation (11), the at least one reference marking (12) and the area markings (13.1, 13.2), and the aperture grating (29) and a detector arrangement (25) with the area signal detector (26), an incremental signal detector (27) and a reference signal detector (28).

10. Position measuring device according to at least one of the preceding claims, **characterized in that** the area signal detector (26) consists of two groups of detector elements (26.1, 26.2) arranged in a periodically alternating fashion, the detector elements (26.1, 26.2) of a group in each case being interconnected to one another.

11. Position measuring device according to Claim 3, **characterized in that** the diffraction grating is embodied as a phase grating with resulting +/- 1st orders of diffraction and a suppressed 0th order of diffraction such that there is a spatial displacement of the strip pattern in the detection plane during the transition of the scanning beam between the area markings (13.1, 13.2).

12. Position measuring device according to Claim 10 and 11, **characterized in that**

- the periodicities of the aperture grating (29) and of the area signal detector (26) are selected in such a way, and the aperture grating (29) and the area signal detector (26) are arranged in such a way,

- that the first group of detector elements (26.1) registers a maximum scanning signal ($S_1$) and the second group of detector elements (26.2) registers a minimum scanning signal ($S_2$) in the case where the scanning unit (10) is positioned on the first side of the reference marking (12) and
- that the first group of detector elements (26.1) registers a minimum scanning signal ($S_1$) and the second group of detector elements (26.2) registers a maximum scanning signal ($S_2$) in the case where the scanning unit (10) is positioned on the second side of the reference marking (12).

13. Position measuring device according to Claim 10 and 11, **characterized in that** the scanning signals ($S_1$, $S_2$) of the first group and second group of detector elements (26.1, 26.2) are suppliable to a difference forming element (40) to form the area signal (B) and the area signal (B) is generable from the resultant difference signal ($\Delta S$) by way of a comparator element (41) arranged downstream thereof.

14. Position measuring device according to Claim 3, **characterized in that** the diffraction grating is embodied as an amplitude grating or phase grating with resultant 0th and +/- 1st orders of diffraction such that strip patterns with different mean intensities ($I_1'$, $I_2'$) emerge in the detection plane when scanning the different region markings.

15. Position measuring device according to Claim 15, **characterized in that**, for the purposes of forming the area signal, the scanning signals ($S_1'$, $S_2'$) of the first group and second group of detector elements are suppliable with different gain to a difference forming element and the area signal (B') is generable from the resultant difference signal (B') by way of a downstream comparator element.

## Revendications

1. Dispositif de mesure de position comportant une échelle (10) et une unité de balayage (20) mobile par rapport à celle-ci dans la direction de mesure (x), dans lequel

- l'échelle (10) comporte une graduation de mesure (11) et des signaux de mesure périodiques peuvent être générés par un balayage optique de la graduation de mesure (11),
- l'échelle (10) comporte au moins un repère de référence (12) et un signal de référence (REF) peut être généré par un balayage optique du repère de référence (12),
- l'échelle (10) comporte des repères de zones (13.1, 13.2) pouvant être balayés optiquement et un signal de zone (B) peut être généré par un balayage optique des repères de zones (13.1, 13.2) au moyen d'un faisceau de rayons de balayage et par leur détection par l'intermédiaire d'un détecteur de signal de zone (26), par l'intermédiaire duquel il est possible de distinguer si l'unité de balayage (20) se trouve du premier ou du second côté du repère de référence (12), et
- les repères de zones (13.1, 13.2) du premier et du second côté du repère de référence (12) produisent des effets de déviation différents sur le faisceau de rayons de balayage incident sur ceux-ci,

**caractérisé en ce qu'**il est prévu un réseau d'obturation périodique (29) entre l'échelle (10) et le détecteur de signal de zone (26), qui est réalisé et est disposé de manière à ce que, lors du balayage optique des repères de zones (13.1, 13.2) dans le plan de détection du détecteur de signal de zone (26), il en résulte un motif de franges à partir duquel au moins deux signaux de balayage ($S_1$, $S_2$ ; $S_1'$, $S_2'$) pouvant être distingués peuvent être générés en fonction de la position de l'unité de balayage (20) par rapport au repère de référence (12).

2. Dispositif de mesure de position selon la revendication 1, **caractérisé en ce que** la périodicité ($P_{BG}$) du réseau d'obturation (29) est sélectionnée conformément à

$$P_{BG} = u/(u + v) \cdot P_{BD},$$

avec :

P_BG : périodicité du réseau d'obturation
u : distance parcourue par le faisceau de rayons de balayage du réseau d'émission, par l.intermédiaire de l'échelle, jusqu'au réseau d'obturation
v : distance parcourue par le faisceau de rayons de balayage entre le réseau d'obturation et le plan de détection du détecteur de signal de zone
P_BD : périodicité du détecteur de signal de zone.

**3.** Dispositif de mesure de position selon la revendication 1, **caractérisé en ce que** le repère de zone (13.1) du premier côté du repère de référence (12) est réalisé de manière réfléchissante et le repère de zone (13.2) du second côté du repère de référence (12) est réalisé sous la forme d'un réseau de diffraction de réflexion.

**4.** Dispositif de mesure de position selon la revendication 3, **caractérisé en ce que** le réseau de diffraction de réflexion du repère de zone (13.2) possède une périodicité ($P_{BM}$) différente de celle de la graduation de mesure (11).

**5.** Dispositif de mesure de position selon la revendication 4, **caractérisé en ce que** la périodicité ($P_{BM}$) du réseau de diffraction de réflexion est sélectionnée conformément à

$$P_{BM} = \lambda/(\sin(\operatorname{atan}(P_{SG} (u + v)))),$$

avec :

P_BM : périodicité du réseau de diffraction de réflexion du repère de zone
u : distance parcourue par le faisceau de rayons de balayage du réseau d'émission, par l'intermédiaire de l'échelle, jusqu'au réseau d'obturation
v : distance parcourue par le faisceau de rayons de balayage entre le réseau d'obturation et le plan de détection du détecteur de signal de zone
λ : longueur d'onde de la source de lumière utilisée
P_SG : périodicité du réseau d'émission.

**6.** Dispositif de mesure de position selon au moins l'une des revendications précédentes, **caractérisé en ce que** les repères de zones (13.1, 13. 2) sont disposés dans une piste de repères de zones et le repère de référence (12) est disposé dans une piste de repères de référence sur l'échelle (10), dans lequel la piste de repères de zones et la piste de repères de référence s'étendent parallèlement le long de la direction de mesure (x).

**7.** Dispositif de mesure de position selon la revendication 6, **caractérisé en ce que** l'échelle (10) comporte plusieurs zones limites (50.1, 50.2), dans lequel les zones limites (50.1, 50.2) sont réalisées par une modification partielle de l'effet optique des repères de zones (13.1, 13.2) ou de la piste de repères de référence.

**8.** Dispositif de mesure de position selon la revendication 7, **caractérisé en ce que** les zones limites (50.1, 50.2) sont réalisées au moins dans des zones partielles de la piste de repères de zones ou de la piste de repères de référence, dans lequel des réseaux de transmission ou des réseaux de réflexion sont disposés dans les zones limites (50.1, 50.2) de manière orientée perpendiculairement à la graduation de mesure (11).

**9.** Dispositif de mesure de position selon au moins l'une des revendications précédentes, **caractérisé par** une source de lumière (21) rayonnant de manière divergente, qui éclaire, sans éléments optiques interposés un réseau d'émission (22) périodique, en aval duquel est disposé, dans la direction de propagation du faisceau, l'échelle (10) comportant la graduation de mesure (11), l'au moins un repère de référence (12) et les repères de zones (13.1, 13.2) ainsi que le réseau d'obturation (29) et un système détecteur (25) comportant le détecteur de signal de zone (26), un détecteur de signal incrémentiel (27) et un détecteur de signal de référence (28).

**10.** Dispositif de mesure de position selon au moins l'une des revendications précédentes, **caractérisé en ce que** le détecteur de signal de zone (26) est constitué de deux groupes d'éléments détecteurs (26.1, 26.2) disposés de manière alternée périodiquement, dans lequel les éléments détecteurs (26.1, 26.2) d'un groupe sont respectivement connectés les uns aux autres.

**11.** Dispositif de mesure de position selon la revendication 3, **caractérisé en ce que** le réseau de diffraction est réalisé sous la forme d'un réseau de phase ayant des ordres de diffraction +/-1 qui en résultent et un ordre de diffraction 0 supprimé, de sorte que, lors du passage du faisceau de rayons de balayage entre les repères de zones (13.1, 13.2) il se produit un décalage spatial du motif de franges dans le plan de détection.

**12.** Dispositif de mesure de position selon les revendications 10 et 11, **caractérisé en ce que**

  - les périodicités du réseau d'obturation (29) et du détecteur de signal de zone (26) sont sélectionnées et le réseau d'obturation (29) ainsi que le détecteur de signal de zone (26) sont disposés de manière
  - à ce que, dans le cas où la position de l'unité de balayage (10) se trouve du premier côté du repère de référence (12), le premier groupe d'éléments détecteurs (26.1) enregistre un signal de balayage maximal ($S_1$) et le second groupe d'éléments détecteurs (26.2) enregistre un signal de balayage ($S_2$) minimal et
  - à ce que, dans le cas où la position de l'unité de balayage (10) se trouve du second côté du repère de référence (12), le premier groupe d'éléments détecteurs (26.1) enregistre un signal de balayage ($S_1$) minimal et le second groupe d'éléments détecteurs (26.2) enregistre un signal de balayage ($S_2$) maximal.

**13.** Dispositif de mesure de position selon les revendications 10 et 11, **caractérisé en ce que**, pour former le signal de zone (B), les signaux de balayage ($S_1$, $S_2$) des premier et second groupes d'éléments détecteurs (26.1, 26.2) peuvent être envoyés à un élément de calcul de différence (40) et le signal de zone (B) peut être généré à partir du signal de différence ($\Delta S$) qui en résulte par l'intermédiaire d'un élément comparateur (41) disposé en aval.

**14.** Dispositif de mesure de position selon la revendication 3, **caractérisé en ce que** le réseau de diffraction est réalisé sous la forme d'un réseau d'amplitude ou de phase ayant des ordres de diffraction 0 et +/- 1 qui en résultent, de manière à ce qu'il en résulte, lors du balayage des différents repères de zones, des motifs de franges ayant des intensités moyennes ($I_1'$, $I_2'$) différentes dans le plan de détection.

**15.** Dispositif de mesure de position selon la revendication 14, **caractérisé en ce que**, pour former le signal de zone, les signaux de balayage $S_1'$, $S_2'$) des premier et second groupes d'éléments détecteurs peuvent être envoyés en étant amplifiés différemment à un élément de calcul de différence et le signal de zone (B') peut être généré à partir du signal de différence qui en résulte par l'intermédiaire d'un élément comparateur disposé en aval.

FIG.1

FIG.2

FIG.3

50.1    13.1    13.2    50.2

11

10

12

Y
X

FIG.4

29

30

24

31

Y
X

FIG.5

FIG.6

FIG.7

$x_{REF}$

FIG.8a

FIG.8b

$\Delta_S$

$x_{REF}$

B

$x_{REF}$

FIG.9a

FIG.9b

FIG.10

$I_1'$

$I_2'$

$X_{REF}$

FIG.11

$S_1'$

$S_2'$

$x_{REF}$

$B$

$x_{REF}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10132521 A1
- EP 2520906 A1
- DE 102008044858 A1
- DE 102011076055 A1
- DE 4111873 C2
- EP 0145844 B1

**In der Beschreibung aufgeführte Nicht-Patentliteratur**

- Analysis of Grating Imaging and its Application to Displacement Metrology. *SPIE Vol. 36, 1st European Congress on Optics applied to Metrology,* 1977, vol. 36, 325-332